**Europäisches Patentamt**

(19) **European Patent Office**

**Office européen des brevets**

(11) Numéro de publication: **0 215 872**
**B1**

(12) # FASCICULE DE BREVET EUROPÉEN

(45) Date de publication du fascicule du brevet:
02.08.89

(51) Int. Cl.⁴: **A 23 L 1/275,** A 23 L 1/04,
A 23 P 1/08

(21) Numéro de dépôt: 86901886.1

(22) Date de dépôt: 07.03.86

(86) Numéro de dépôt international:
PCT/FR 86/00072

(87) Numéro de publication internationale:
WO 86/05363 (25.09.86 Gazette 86/21)

(54) **COMPOSITION ALIMENTAIRE COLOREE A USAGE NOTAMMENT DE DECOR.**

(30) Priorité: 12.03.85 FR 8503797

(43) Date de publication de la demande:
01.04.87 Bulletin 87/14

(45) Mention de la délivrance du brevet:
02.08.89 Bulletin 89/31

(84) Etats contractants désignés:
AT BE CH DE FR GB IT LI LU NL SE

(56) Documents cité:
EP-A-0 040 048
EP-A-0 048 123
DE-B-1 160 718
FR-A-2 350 059
US-A-2 861 891
US-A-3 717 469

Patents Abstracts of Japan, volume 7, no. 66 (C-157)(1211), 18 March 1983 & JP A 5811752 (TOYO INK SEIZO) 07 January 1983, see abstract (cited in application)
Patent Abstracts of Japan, volume 6, no. 85 (C-103)(963), 22 May 1982 & JP A 5716675 (AUNOMOTO GENERAL FUUZU) 28 January 1982, see abstract

(73) Titulaire: BEST, Christian, 30 A, rue du Vernand,
F-74100 Annemasse (FR)

(72) Inventeur: MICHEL, Jean- Pierre, 18, domaine de
la Prasle, F-74160 Collonges- sous- Salève (FR)
Inventeur: LEJEUNE, Denise, Route de
Manessières, F-74160 Collonges- sous- Salève (FR)

(74) Mandataire: Moinas, Michel, Cabinet Michel
Moinas 13 Chemin du Levant, F-01210 Ferney-
Voltaire (FR)

**Description**

La présente invention se rapporte à une composition alimentaire colorée, à usage notamment de décor, ainsi qu'un procédé de fabrication d'une telle composition alimentaire. L'invention se rapporte également à l'utilisation de cette composition comme décor alimentaire, par exemple en salaison ou en charcuterie, en pâtisserie et en glacerie.

Dans le domaine de la charcuterie, par exemple les pâtés, ou de la pâtisserie, on aime à décorer les produits avec des motifs ou inscriptions divers (gâteaux d'anniversaire par exemple). Pour ce faire, on peut utiliser des objets en matière plastique, mais il est évidemment de beaucoup préférable d'utiliser une composition alimentaire pouvant être consommée avec le produit lui-même.

Dans l'industrie, on se heurte à des difficultés provenant du fait que le décor alimentaire est difficile à poser automatiquement, que ses propriétés mécaniques s'altèrent rapidement avec le temps et que le colorant qu'il contient a fortement tendance à diffuser vers le produit sur lequel il est posé.

Ainsi, les décors alimentaires classiques, enrobés de gelée, voient rapidement leurs colorants migrer dans la gelée, ce qui est d'un effet esthétique désastreux. Pour les mêmes raisons, il est difficile de réaliser des décors polychromes car les colorants vont petit à petit se mélanger en migrant l'un dans l'autre.

Ainsi encore, dans les produits glacés tels que des bûches, les décors alimentaires classiques tiennent mal en congélation et ne permettent pas une dépose automatique.

Selon l'exposé EP-A-0 048 123, on connaît des émulsions gélifiées contenant des alginates, dont la prise est provoquée par l'action d'ions divalents ou trivalents, par exemple d'ions Ca++. De ce fait, les gels obtenus sont irréversibles, en particulier non thermoréversibles. Ils sont utilisés comme agents d'enrobage et de nappage pour toutes sortes de produits alimentaires. Destinés à avoir un effet protecteur ou de recouvrement, ils sont par nécessité relativement adhérents.

L'invention permet de résoudre les problèmes énoncés plus haut sans présenter les inconvénients des gels décrit dans l'exposé européen indique ci-dessus. Elle concerne une composition alimentaire colorée utilisable notamment à titre de décor, qui présente une très bonne tenue mécanique, ne s'altère pas au cours du temps et permet la dépose automatique. Cette composition tient bien à la congélation et retient fortement son colorant lorsqu'elle est entourée de matières riches en eau, telle que de la gelée.

La composition présente souplesse et élasticité et est thermo-reversible, donnant une impression de fondant sur la langue du consommateur. Non aromatisée, elle est totalement neutre organoléptiquement, s'effaçant devant le produit alimentaire qu'elle décore.

Selon l'invention, la composition alimentaire colorée se caractérise par la combinaison suivante, exprimée en parties pondérales:

| | |
|---|---|
| - huile | 3 à 7 |
| - pigment et/ou colorant hydrophobe | 0,2 à 2 |
| - émulgateur | 1 à 2 |
| - agent gélifiant comprenant un carraghénane | 0,1 à 2 |
| - eau | 75 à 95. |

La composition a un toucher non collant et peut donc être conditionnée en emballage, selon une autre forme d'exécution de l'invention. Elle peut être notamment présentée en emballages individuels, type blisters par exemple; elle se démoule très facilement.

De préférence, l'huile est constituée de triglycérides, l'émulgateur est constitué de mono et/ou diglycérides, et l'agent gélifiant comprend également de l'agar-agar. Avantageusement, l'agar-agar est en proportions pondérales comprises entre 15 et 75 % de l'agent gélifiant total.

La composition peut comprendre également d'autres constituants, destinés à lui donner tel ou tel caractère particulier en fonction de l'utilisation envisagée. Citons par exemple de la gomme de Guar, de la gelatine, du glycérol et de l'acide citrique (goût et régulation du pH).

La composition alimentaire colorée peut comprendre également du sorbate de potassium ou un autre sel de potassium tel KCl, à raison de 0,01 à 0,1 % en poids, et peut être aromatisée, par adjonction d'un agent aromatisant approprié.

A titre de colorant, on peut utiliser n'importe quel colorant ou pigment de type alimentaire, hydrophobe ou carrément insoluble dans l'eau. Citons à titre d'exemples la chlorophylle liposoluble (E 141), l'oléopaprika, l'oléotagète, l'oléopersil, le rocou liposoluble (E 160) et le noir végétal (E 153). De la sorte, toute la gamme des couleurs peut être couverte.

Une gamme de compositions préférée se présente par exemple exprimées en parties pondérales, comme suit:

| | |
|---|---|
| - huile | 3 à 7 |
| - pigment et/ou colorant hydrophobe | 0,2 à 2 |
| - émulgateur | 1 à 2 |
| - carraghénane | 0,1 à 2 |
| - gomme de Guar | 0,1 à 2 |
| - gélatine | 5 à 15 |

| | |
|---|---|
| - glycérol | 2 à 5 |
| - sorbate de postassium | 0,1 à 0,01 |
| - acide citrique | pour pH = 5,0 |
| - eau | 75 à 85. |

Pour préparer cette composition alimentaire, on commence par réaliser une dispersion dans l'eau de l'agent gélifiant, éventuellement de la gomme de Guar et de la gélatine, à une température comprise entre 80 et 100°C. On agite jusqu'à homogénéité complète, puis on ajoute l'émulgateur et une solution du colorant dans l'huile ou une suspension du pigment dans l'huile, ce qui forme une émulsion qu'on laisse refroidir entre 50 et 80°C avant mise en forme et refroidissement à température ambiante. On obtient ainsi la composition alimentaire colorée désirée.

La mise en forme peut être réalisée par injection ou par coulage dans des moules de dimensions et formes appropriées. Le conditionnement peut se faire en emballage individuels, par exemple en blisters.

La composition alimentaire obtenue peut être composite et polychrome, et comprendre plusieurs couleurs différentes pouvant dessiner un motif. Il s'agit complement de simbiner, par exemple, plusieurs coulées correspondant chacune à une composition alimentaire colorée différente. Le motif polychrome, qu'il soit conservé tel quel ou déposé sur un produit alimentaire, reste stable dans le temps; les colorants ne se mélangent pas.

A la différence des émulsions décrites dans l'exposé EP-A-0 048 123 qui sont des gels irréversible résultant de la réaction d'un alginate et d'ions $Ca^{++}$, la composition selon l'invention possède une certain souplesse et élasticité qui est due précisément à l'emploi d'un carraghénane. La gomme de Guar peut servir, si nécessaire, à réguler les teneurs en eau pour empêcher une éventuelle synérèse, notamment lors de cycles congélation /décongélation (important dans l'industrie des produits congelés et surgelés).

Les compositions selon l'invention sont fondantes à la langue, alors que les émulsions de l'exposé européen ont plutôt une texture du type "gomme à mâcher". En outre, certains colorants alimentaires floculent ou pâlissent en présence de $Ca^{++}$ et ne peuvent donc être utilisés dans ces émulsions. La gamme des colorants accessibles aux compositions de l'invention est donc plus vaste.

Enfin, parmi les avantages de ces compositions, on citera encore:

- une grande stabilité des colorants qui ne migrent pas,
- une résistance mécanique et une élasticité suffisante pour une manipulation commode, notamment pour la dépose automatisée,
- un toucher non collant pour un démoulage facile de l'emballage, ou pour la dépose sur l'aliment sans y adhérer,
- une rapidité de prise en gel permettant d'attendre des cadences élevées en fabrication.

L'invention est illustrée dans les exemples suivants.

## Exemple 1

Dans un réacteur thermorégulé à une température comprise entre 95 et 100°C, on incorpore successivement, dans 700 g d'eau fortement brassée, 4,0 g de carraghénane et 6,0 g d'agar-agar; on maintient le mélange sous agitation pendant une heure environ jusqu'à dissolution totale des agents gélifiants.

On ajoute ensuite 9,3 g d'un émulgateur KIRNOL, qui est un mélange de mono et diglycérides d'acides gras et 30,0 g d'une solution dans l'huile de 3,5 g d'un colorant alimentaire orangé (oléotagète).

L'agitation est poursuivie de façon à réaliser une émulsion parfaitement stable de ces différents constituants.

La formulation est alors ramenée à une température de 70 à 80°C pour être coulée dans des moules en matière plastique aux formes appropriées. La prise en gel a lieu rapidement, en quelques minutes à température ambiante, elle peut être encore accélérée au froid après quoi les moules sont fermés de façon étanche par thermo-soudage ou soudage haute-fréquence.

Le produit présente d'excellentes propriétés mécaniques alliant à la fois résistance et souplesse. Il se conserve très bien tel quel et également une fois déposé sur un produit charcutier et enrobé de gelée. Le colorant ne migre pas dans la gelée.

## Exemple 2

Le même type d'émulsion permet de stabiliser de façon homogène et stable du charbon végétal pulvérulent, insoluble, utilisé comme pigment noir.

Aux agents gélifiants dissous comme précédemment dans l'eau on ajoute successivement 7,2 g d'émulgateur KIRNOL, 21,8 g d'huile triglycéride et 7,5 g de charbon.

On émulsionne le tout avant de couler la formulation.

Le produit obtenu possède des caractéristiques comparables à celui de l'exemple 1, tant du point de vue mécanique que rétention du pigment coloré.

**Exemple 3**

On réalise plusieurs émulsions de coloration variées:

- vert au moyen de pigment chlorophyllien
- orange au moyen de pigment tagète
- noir au moyen de charbon végétal
- jaune au moyen de pigment rocou.

Ces formulations sont coulées simultanément dans des moules appropriés; elles se juxtaposent sans provoquer de mélange de couleurs.

On peut réaliser ainsi des objets moulés polychromatiques: imitations de fruits, de légumes...

A l'usage sur un produit alimentaire, bûche glacée par exemple, on ne constate ni mélange des couleurs, ni migration de celles-ci dans le produit alimentaire.

**Exemple 4**

Dans un réacteur thermo-régulé à une température comprise entre 95 et 100°C, on incorpore successivement, dans 600 g d'eau fortement brassée, 5,6 g de carraghénane, 4,0 g de gomme de Guar, 180 g de gélatine (grade de viscosité 200 à 400 Bloom); on maitient le mélange sous agitation pendant une heure environ jusqu'à dissolution totale de ces polymères. On ajoute ensuite 60 g de glycérol, 12 g d'émulgateur KIRNOL, 48 g d'une huile végétale contenant à l'état dispersé ou dissous la quantité suffisante de colorant.

L'agitation est poursuivie de façon à réaliser une emulsion stable de ces différents constituants.

La formulation est alors traitée et conditionnée comme décrit dans l'exemple 1.

Ce type de formulation est parfaitement adapté à la réalisation de décors moulés destinés à l'industrie des crèmes et pâtisseries glacées.

**Revendications**

1. Composition alimentaire colorée, caractérisée par la combinaison suivante, exprimée en partiel pondérales;

| | |
|---|---|
| - huile | 3 à 7 |
| - pigment et/ou colorant hydrophobe | 0,2 à 2 |
| - émulgateur | 1 à 2 |
| - agent gélifiant comprenant un carraghénane | 0,1 à 2 |
| - eau | 75 à 95. |

2. Composition selon la revendication 1, caractérisée en ce que l'huile est constituée de triglycérides.

3. Composition selon la revendication 1, caractérisée en ce que l'émulgateur est constitué de mono et/ou diglycérides.

4. Composition selon la revendication 1, caractérisée en ce que l'agent gélifiant comprend également de l'agar-agar, en proportions comprises entre 15 et 75 % de l'agent gélifiant total.

5. Composition selon la revendication 1, caractérisé en ce qu'elle comprend également de la gomme de Guar à raison de 0,1 à 2 parties pondérales.

6. Composition selon la revendication 1, caractérisée en ce qu'elle comprend également de la gélatine à raison de 5 à 15 parties pondérales.

7. Composition selon la revendication 1, caractérisée en ce qu'elle comprend également du glycérol à raison de 2 à 5 parties pondérales.

8. Composition selon la revendication 1, caractérisée en ce qu'elle est conditionnée en blisters.

9. Procédé de fabrication de la composition selon la revendication 1, caractérisé en ce que l'on prépare une solution dans l'eau de l'agent gélifiant, à une température comprise entre 80 et 100°C, puis qu'on ajoute à cette solution l'agent émulgateur et une solution ou suspension du colorant ou du pigment dans l'huile, l'émulsion obtenue étant refroidie entre 50 et 80°C pour être mise en forme de façon à obtenir après refroidissement à température ambiante la composition alimentaire colorée.

10. Procédé selon la revendication 9 pour la fabrication de la composition selon la revendication 5 ou 6, caractérisé en ce qu'on ajoute la gomme de Guar et/ou la gélatine dans l'eau avec l'agent gélifiant.

**Patentansprüche**

1. Gefärbte Nahrungsmittelzusammensetzung, gekennzeichnet durch folgende Zusammensetzung, ausgedrückt in Gewichtsteilen:

| | |
|---|---|
| - Öl | 3 bis 7 |
| - hydrophobes Pigment und/oder Farbstoff | 0,2 bis 2 |
| - Emulgator | 1 bis 2 |
| - Geliermittel, das ein Carragenan enthält | 0,1 bis 2 |
| - Wasser | 75 bis 95 |

2. Zusammensetzung nach Anspruch 1,
dadurch gekennzeichnet,
daß das Öl aus Triglyceriden besteht.

3. Zusammensetzung nach Anspruch 1,
dadurch gekennzeichnet,
daß der Emulgator aus Mono- und/oder Diglyceriden besteht.

4. Zusammensetzung nach Anspruch 1,
dadurch gekennzeichnet,
daß das Geliermittel auch Agar-Agar in Mengenverhältnissen zwischen 15 und 75 % des gesamten Geliermittels enthält.

5. Zusammensetzung nach Anspruch 1,
dadurch gekennzeichnet,
daß sie auch Guar-Gummi in einer Menge von 0,1 bis 2 Gewichtsteilen enthält.

6. Zusammensetzung nach Anspruch 1,
dadurch gekennzeichnet,
daß sie auch Gelatine in einer Menge von 5 bis 15 Gewichtsteilen enthält.

7. Zusammensetzung nach Anspruch 1,
dadurch gekennzeichnet,
daß sie auch Glycerin in einer Menge von 2 bis 5 Gewichtsteilen enthält.

8. Zusammensetzung nach Anspruch 1,
dadurch gekennzeichnet,
daß sie in Blistern konditioniert ist.

9. Verfahren zur Herstellung der Zusammensetzung nach Anspruch 1,
dadurch gekennzeichnet,
daß man eine Lösung des Geliermittels in dem Wasser bei einer Temperatur zwischen 80 und 100°C herstellt, daß man dann zu dieser Lösung das Emulgiermittel und eine Lösung oder Suspension des Farbstoffs oder Pigments in dem Öl zusetzt, wobei die erhaltene Emulsion auf 50 bis 80°C abgekühlt wird, um in Form gebracht zu werden, sodaß nach dem Abkühlen auf Raumtemperatur die gefärbte Nahrungsmittelzusammensetzung erhalten wird.

10. Verfahren nach Anspruch 9 zur Herstellung der Zusammensetzung nach Anspruch 5 oder 6,
dadurch gekennzeichnet,
daß man den Guar-Gummi und/oder die Gelatine im Wasser mit dem Geliermittel zusetzt.


**Claims**

1. A coloured food composition, characterized by the following combination, expressed in parts by weight

| | |
|---|---|
| oil | 3.0 to 7.0 |
| hydrophobic pigment and/or colouring | 0.2 to 2.0 |
| emulsifier | 1.0 to 2.0 |
| gelling agent comprising carrageenin | 0.1 to 2.0 |
| water | 75.0 to 95.0 |

2. A composition according to claim 1, characterized in that the oil is constituted by triglycerides.

3. A composition according to claim 1, characterized in that the emulsifier is constituted by monoglycerides and/or diglycerides.

4. A composition according to claim 1, characterized in that the gelling agent also contains agar-agar in proportions of between 15 and 75 %, based on the total gelling agent.

5. A composition according to claim 1, characterized in that it also contains guar gum in a proportion of from 0.1 to 2 parts by weight.

6. A composition according to claim 1, characterized in that it also contains gelatine in a proportion of from 5 to 15 parts by weight.

7. A composition according to claim 1, characterized in that it also contains glycerol in a proportion of from 2 to 5 parts by weight.

8. A composition according to claim 1, characterised in that it is packaged in blister packs.

9. A process for the production of the composition according to claim 1, characterized in that a solution of said gelling agent in water is prepared at a temperature of between 80 and 100°C, the emulsifying agent and a solution or suspension of the colouring or pigment in oil is added to this solution, the emulsion obtained being cooled to between 50 and 80°C and then being shaped to obtain said coloured food composition on cooling to ambient temperature.

10. A process according to claim 9 for the production of the composition according to claim 5 or 6, characterised in that guar gum and/or gelatine in water is added with the gelling agent.